# EUROPÄISCHE PATENTANMELDUNG

(11) **EP 0 807 590 A1**
(43) Veröffentlichungstag der Anmeldung: **19.11.1997**
(21) Anmeldenummer: 96106798.0
(22) Anmeldetag: 30.04.1996
(51) Int. Cl.: B65G 1/02, A47B 57/52

(54) **Kragarm-Regal-System**

(71) Anmelder: Paul, Dieter, Dipl.-Ing., 30890 Barsinghausen (DE)
(72) Erfinder: Paul, Dieter, Dipl.-Ing., 30890 Barsinghausen (DE)

(57) **Zusammenfassung**

Ein Schwerlast-Kragarm-Steckregal System besteht aus Doppel-T-Trägerprofil-Standsäulen einseitig, oder beidseitig, sowie Horizontal- und Vertikal-Verbindern und mittels Sicherheits-Stechriegel montierten Kragarmen.

Die Kragarme können im Raster nach oben, oder unten montiert werden.

## Beschreibung

Die Erfindung bezieht sich auf Regale, für die Personenkraftwagen - Lagerung in Auto-Recycling-Demontage-Betrieben, oder Demontage-Betrieben.

Schwerlast-Kragarm-Steckregale kommen häufig zum Einsatz bei der Zwischenlagerung der vorgenannten Personenkraftwagen. Sie werden vorwiegend als Außenlager eingesetzt.

Ein Vorteil eines solchen Regales ist seine hohe Tragfähigkeit, die in der Regel ca. 1.000 Kg/Kragarm, sowie 4.000 Kg/Regalsäulenseite betragen kann. Ein weiterer Vorteil ist das Doppel-Sicherheits-Stecksystem, mit dem die Kragarme mit dem Regalständer verbunden sind. Der abgesetzte Steckriegel verhindert nach dem Einhängen des Kragarmes ein seitliches Herauswandern desselben.
Ein wesentliches Merkmal dieser Kragarm-Schnellverbindung ist, das keine Schraubstellen vorhanden sind

Weitere Vorteile in Kurzfassung:
Ankippen der Kragarmspitzen auf 5° begrenzt.
Keine Ständer-Schwächung durch Lochung des Ständers.
Umkippen durch einseitige Fehlbenutzung ausgeschlossen.
Austauschbarkeit der Kragarme mit Regalen anderer Abmessungen.
Bei Beschädigung leichtes Auswechseln des Langloch-C-Profiles.
Einhaltung der Unfall-Verhütungs-Vorschriften.
Lange Lebensdauer.

Eine detaillierte Beschreibung dieses Regales ist unter der Patent-Nr. 95107600.9-2308 zu finden.

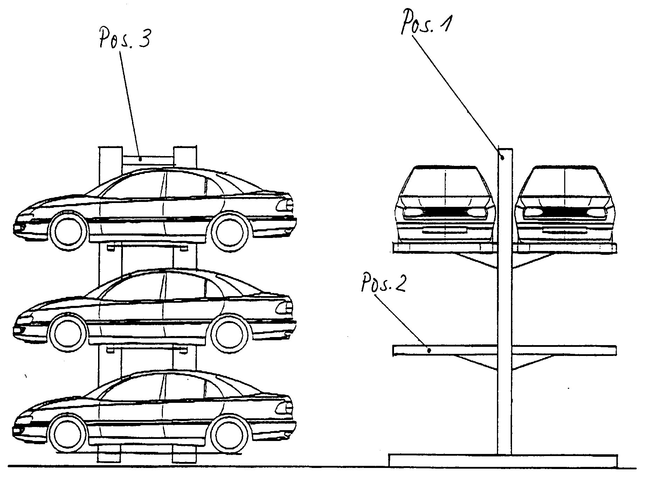

## Patentansprüche

1. Im folgenden wird ein Beispiel der Erfindung mit Bezug auf die beiliegende Zeichnung näher erläutert.
In Zeichnung IC 80-007-00-00 ist die Doppel-T-Trägerprofil-Standsäule (Pos. 1), verbunden mit horizontalen und diagonalen Verbindern ( Pos.3 ), sowie die daran mittels Steckriegel befestigten Kragarme ( Pos. 2 ) zu sehen.
Die Kragarme ( Pos. 2 ) auf denen die Personenkraftwagen abgelegt werden, bestehen aus einem Doppel-Träger-Profil (z. B. IPE 140), einem U-förmigen Kragarmschuh und einem Halbrund-Kantenschutz-Abweiser. Alle Teile sind miteinander verschweißt.
